Europäisches Patentamt

European Patent Office

Office européen des brevets

(19)

(11) **EP 0 579 651 B1**

## (12) EUROPÄISCHE PATENTSCHRIFT

(45) Veröffentlichungstag und Bekanntmachung des Hinweises auf die Patenterteilung:
**18.09.1996 Patentblatt 1996/38**

(21) Anmeldenummer: **92907740.2**

(22) Anmeldetag: **04.04.1992**

(51) Int Cl.⁶: **H04N 5/44**, H04N 7/12

(86) Internationale Anmeldenummer:
**PCT/EP92/00763**

(87) Internationale Veröffentlichungsnummer:
**WO 92/19071 (29.10.1992 Gazette 1992/27)**

(54) **VERFAHREN ZUR CODIERUNG**

CODING PROCESS

PROCEDE DE CODAGE

(84) Benannte Vertragsstaaten:
**AT CH DE ES FR GB IT LI LU**

(30) Priorität: **12.04.1991 DE 4111980**

(43) Veröffentlichungstag der Anmeldung:
**26.01.1994 Patentblatt 1994/04**

(73) Patentinhaber: **DEUTSCHE THOMSON-BRANDT GMBH**
**78048 Villingen-Schwenningen (DE)**

(72) Erfinder:
- **HERPEL, Carsten**
  **D-3000 Hannover 1 (DE)**
- **HEPPER, Dietmar**
  **D-3000 Hannover 1 (DE)**

(74) Vertreter: **Hartnack, Wolfgang, Dipl.-Ing. et al**
**Deutsche Thomson-Brandt GmbH**
**Patentabteilung**
**Göttinger Chaussee 76**
**30453 Hannover (DE)**

(56) Entgegenhaltungen:
**EP-A- 0 390 660          EP-A- 0 414 113**

- **IEEE Transactions on Broadcasting, Band BC-33, Nr. 4, Dezember 1987, (New York, US), Y. NINOMIYA et al.: "An HDTV broadcasting system utilizing a bandwidth compression technique - MUSE", Seiten 130-160, siehe Seite 134, linke Spalte, Zeile 21 - Seite 136, linke Spalte, Zeile 2; Seite 137, rechte Spalte, Zeile 1 - Seite 138, rechte Spalte, Zeile 18**
- **Signal Processing, Band 16, Nr. 2, Februar 1989, (Amsterdam, NL), B. GIROD et al.: "Vertical sampling rate decimation and line-offset decimation of colour difference signals", Seiten 109-127, siehe Seite 112, linke Spalte, Zeile 12 - Seite 113, linke Spalte, Zeile 32**
- **Philips Technical Review, Band 43, Nr. 8, August 1987, (Eindhoven, NL), M.J.J. C. ANNEGARN et al.: "HD-MAC: a step forward in the evolution of television technology", Seiten 197-212, siehe Seite 204, linke Spalte, Zeile 1 - Seite 206, linke Spalte, Zeile 33; Seite 208, linke Spalte, Zeile 28 - rechte Spalte, Zeile 25; Abbildung 11**
- **ICASSP'82 Proceedings, Paris, 3. - 5. Mai 1982, Band 1, IEEE, (New York, US), T.S. HUANG et al.: "Interframe coding with general two-dimensional motion compensation", Seiten 464-466, siehe das ganze Dokument**
- **IEEE International Symposium on Circuits and Systems - Proceedings, Espoo, 7. - 9. Juni 1988, Band 1, IEEE, (New York, US), F. MAY: "Model based movement compensation and interpolation for ISDN videotelephony", Seiten 463-466, siehe Seite 463, rechte Spalte, Zeile 13 - Seite 465, rechte Spalte, Zeile 34**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur bewegungskompensierten Vertikalfilterung.

Stand der Technik

In EP-A-0 414 113 ist ein Verfahren beschrieben, wie aus einem Feld von Bewegungsvektoren, z.B. abgeleitet von Bildpunkt-Blöcken, ein Zoom- und Pan-Vektor (Vergrößerungs- und Schwenk-Vektoi) für ein ganzes Bild generiert werden kann.

Erfindung

Der Erfindung liegt die Aufgabe zugrunde, ein Verfahren zur bewegungskompensierten Vertikalfilterung anzugeben. Diese Aufgabe wird durch die in Anspruch 1 angegebene Erfindung gelöst.

Im Prinzip besteht das erfindungsgemäße Verfahren darin, daß bei einer Codierung, bei der aus Bildpunkten bestehende Bildsignale bewegungskompensiert und unter Generierung von Bewegungsparametern codiert werden, bei einer vor der Codierung erfolgenden Bildformatwandlung bildweise Bewegungsparameter zur Bewegungskompensation verwendet werden, wobei die Bildsignale bei der Bildformatwandlung mindestens in vertikaler Richtung unterabgetastet werden und wobei mit Hilfe einer Änderungsdetektion aufgrund der bilmäßigen Bewegungskompensation nicht korrekt bewegungskompensierte Bildpunkte ermittelt werden und wobei die Bildpunkte im Fall korrekter Bewegungskompensation vertikal im Vollbild und im Fall nicht korrekter Bewegungskompensation vertikal im Halbbild gefiltert werden.

Vorteilhafte Weiterbildungen des erfindungsgemäßen Verfahrens ergeben sich aus den abhängigen Ansprüchen 2 bis 7.

Bei einer datenreduzierenden Bildcodierung mit Bewegungskompensation werden Bewegungsvektoren fiir einzelne Bilder oder Bildteile erzeugt. Um die Datenrate weiter zu verringern, können die Bildsignale vor der Codierung unterabgetastet werden.

Wenn die Bildsignale vor der Unterabtastung im Interlace vorliegen und nach der Codierung ein progressives Format haben sollen, kann vor der Codierung in einem Bildformatwandler eine interlace-progressiv-Bildformatumwandlung stattfinden. Progressive Bildsignale können z.B. durch Weglassen jedes zweiten Halbbilds gewonnen werden, wobei allerdings ohne eine entsprechende Vorfilterung Alias in das unterabgetastete Signal eingeführt wird und die mögliche Vertikalauflösung für statischen Bildinhalt vor der Unterabtastung um den Faktor zwei verkleinert wird.

Es kann auch eine bewegungsadaptive Vertikalfilterung vor der Unterabtastung durchgeführt werden. Dabei werden aber im allgemeinen größere Bildbereich als bewegt angesehen. In diesen Bereichen wird die Vertikalauflösung dann um mehr als den Faktor zwei reduziert.

Bei einer Serienschaltung von Bildformatwandlung mit Unterabtastung und bewegungskompensieiter Codierung liegen nach der Codierung von Bild n Bewegungsparameter für die Größe von Zoom und Pan zwischen Bild n-2 und Bild n-1 vor. Da sich diese Parameter in üblichen Fernseh-Bildsignalen nicht sprunghaft von Bild zu Bild ändern, können diese vorliegenden Zoom- und Pan-Parameter als Prädiktion für die noch nicht bekannten entsprechenden Parameter zwischen Bild n-1 und Bild n benutzt werden.

Bei der Bildformatwandlung wird nun jeweils das zweite Halbbild von Bild n mit Hilfe der Zoom- und Pan-Parameter auf die zeitliche und räumliche Position des ersten Halbbilds von Bild n verschoben. Zur Rauschminderung kann vorteilhaft jeweils das zweite Halbbild von Bild n-1 und von Bild n mit Hilfe der Zoom- und Pan-Parameter auf die zeitliche und räumliche Position des ersten Halbbilds von Bild n verschoben werden.

Mit Hilfe eines Änderungsdetektors wird für jeden Bildpunkt im ersten Halbbild von Bild n bestimmt, ob noch nicht-kompensierte Bewegung, z.B. innerhalb von einzelnen Bildbereichen mit unterschiedlichen Bewegungsparametern gegenüber den bildmäßigen, vorliegt. Wenn dies der Fall ist, werden die Bildpunkte aus solchen Bildbereichen mit Hilfe von entsprechenden Bildpunkten des jeweiligen ersten Halbbilds für die Unterabtastung vorgefiltert. Anderenfalls wird eine Filterung benutzt, die Bildpunkte aus dem bewegungskompensierten zweiten Halbbild von Bild n bzw. aus den bewegungskompensierten zweiten Halbbildern von Bild n und n-1 und den aktuellen Bildpunkt selbst verwendet (Filterung im bewegungskompensierten Vollbild).

Die Benutzung von jeweils drei Halbbildern bewirkt dabei die rauschmindernde zeitliche Filterung.

Die während der Formatwandlung generierten Bildsignale liegen in ihrer Ortsauflösung je nach Bildmaterial nahezu an der systemtheoretisch bzw. filtertechnisch möglichen Grenze und enthalten keinen Alias, der von einer Unterabtastung ohne Vorfilterung herrührt. Es ist für die Formatwandlung keine separate Bewegungsschätzung erforderlich, um die bewegungskompensierte zeitliche Vorfilterung durchführen zu können.

<u>Ausführungsbeispiele</u>

Ein Bildformat wandler ist in Reihe mit einem Coder geschaltet. Dem Bildformatwandler ist ein Halbbildspeicher und ein Zeilenspeicher vorgeschaltet, deren Eingänge miteinander verbunden sind. Im Fall einer Unterabtastung auch in horizontaler Richtung wird diese verbunden mit einer entsprechenden Vorfilterung vorteilhaft in einem Horizontal-Bildformatwandler durchgeführt, der dem Halbbildspeicher und dem Zeilenspeicher vorgeschaltet ist. Dadurch wird die erforderliche Verarbeitungsgeschwindigkeit in den nachfolgenden Schaltungen reduziert. Dem Eingang wird ein Interlace-Bildsignal mit den Bildern $S_n$, $n = 1,2,3,...$ zugeführt. Am Ausgang des Bildformatwandlers zum Coder steht danach das gefilterte und unterabgetastete Bildsignal $s_n$ zur Verfügung.

In einem Bewegungs-Parameter-Generator werden aus dem Coder stammende, blockweise Bewegungsparameter, z.B. für Zoom und Pan, in bildweise Bewegungsparameter $p_{n-1}$ für das Bildpaar $s_{n-2}, s_{n-1}$ ($z$, $v_x$, $v_y$) generiert. Dies kann beispielsweise wie in EP-A-0 414 113 beschrieben ausgeführt werden. '$z$' ist dabei der Zoomfaktor, '$v_x$' die Verschiebung in horizontaler Richtung und '$v_y$' die Verschiebung in vertikaler Richtung zwischen zwei Bildern im zeitlichen Abstand von 1/25s. Vorteilhaft wird durch die bildmäßige Bereitstellung und Verarbeitung der Bewegungsparameter die erforderliche Verarbeitungsgeschwindigkeit im Bildformatwandler herabgesetzt.

Die Kompensation der Bewegung in den zweiten Halbbildern $S^2_{n-1}$ und $S^2_n$ auf den Zeitpunkt des jeweils zugehörigen ersten Halbbildes $S^1_n$ mit einer zeitlichen Differenz von $\pm 1/50$s erfordert eine Division der Bewegungsparameter durch den Wert 2. Da andererseits die Ortsauflösung im Halbbild, abgesehen von einer eventuellen horizontalen Bildformatwandlung, in horizontaler Richtung doppelt so groß ist wie in vertikaler, gilt für die im Bildformatwandler zu verwendenden Bewegungsparameter:

$$Z = z/2$$

$$V_x = v_x$$

$$V_y = v_y/2$$

Die kompensierten 2. Halbbilder $s^{2k}_n$, $s^{2k}_{n-1}$ berechnen sich zu

$$s^{2k}_n (x,y) = s^2_n ((1-Z)^*x - V_x, (1-Z)^*y - V_y)$$

$$s^{2k}_{n-1} (x,y) = s^2_{n-1} ((1+Z)^*x + V_x, (1+Z)^*y + V_y),$$

wobei $(x,y)$ einem Koordinatensystem mit Ursprung in der Bildmitte entstammen.

Mit einem Änderungsdetektor werden für jede Position $(x,y)$ im ersten Halbbild $s^1_n$ in einem symmetrisch hierzu angeordneten Fenster von Bildpunkt-Positionen die Absolutwerte der Differenzen der bewegungskompensierten zweiten Halbbilder $s^{2k}_{n-1}$, $s^{2k}_n$ zu einem Wert $\Sigma$ aufsummiert. Die Größe des Fensters ist variabel. Vorzugsweise beträgt sie 5*4 Bildpunkte.

Übersteigt der Wert $\Sigma$ eine erste Schwelle $T_1$ nicht, so erfolgt eine Filterung im bewegungskompensierten Vollbild: $S^{1f}_n (x,y) = fil^v_n(x,y)$.

Übersteigt der Wert $\Sigma$ eine zweite, höhere Schwelle $T_2$, so erfolgt eine Filterung im Halbbild:

$$S^{1f}_n(x,y) = fil^h_n(x,y).$$

Liegt der Wert $\Sigma$ zwischen beiden Schwellen, so ist das Ergebnis eine Linearkombination beider Filtersignale:

$$S^{1f}_n(x,y) = r^*fil^v_n (x,y) + (1-r)^*fil^h_n(x,y),$$

mit

$$r = (T_2 - \Sigma)/(T_2 - T_1).$$

Die Schwellen können z.B. zu $T_1 = 6^*$(Anzahl der Bildpunkte im Fenster) bzw. $T_2 = 12^*$(Anzahl der Bildpunkte im Fenster) gewählt werden.

Zur Änderungs-Detektion kann beispielsweise ein Bildpunkt-Bewegungsdetektor verwendet werden, wie er in EP-A-0 333 069 beschrieben ist. Der Änderungsdetektor erhält entsprechende Eingangsdaten vom Bildformatwandler und sendet den Wert $\Sigma$ zurück.

Die Anzahl der gespeicherten Zeilen in Zeilenspeicher entspricht der maximalen Bewegungskompensation in vertikaler Richtung.

Vorteilhaft entspricht die Filterlänge für die Vertikalfilterung dem Fenster für die Änderungsdetektion in vertikaler Richtung.

Für das vertikale Vollbild-Filter kann gelten:

$$fil^v_n(x,y) = [K_0 * s^1_n(x,y) +$$

$$k_1 * (S^{2k}_{n-1}(x,y-1) + s^{2k}_n(x,y-1)) +$$

$$k_1 * (S^{2k}_{n-1}(x,y) + S^{2k}_n(x,y)) +$$

$$k_2 * (S^{2k}_{n-1}(x,y+1) + S^{2k}_n(x,y+1)) +$$

$$k_2 * (S^{2k}_{n-1}(x,y+2) + S^{2k}_n(x,y+2))] /$$

$$(k_0 + 4 * (k_1 + k_2)),$$

mit $k_0 = 128$, $k_1 = 75$, $k_2 = -11$.

Dabei ist zu beachten, daß $S2_n(x,y-1)$ im Vollbild unmittelbar über $S1_n(x,y)$ und $S2_n(x,y)$ unmittelbar darunter liegt.

Für das vertikale Halbbild-Filter kann gelten:

$$fil^h_n(x,y) = [k_0 * S^1_n(x,y) +$$

$$k_1 * (S^1_n(x,y-1) + S^1_n(x,y+1))] /$$

$$(k_0 + 2 * k_1),$$

mit $k_0 = 8$, $k_1 = 1$.

Das zu codierende Videosignal $s_n$ wird nun aus dem 1. Halbbild $s1f_n$ gewonnen, nachdem es z.B. um den Faktor zwei horizontal und vertikal unterabgetastet wurde.

Die Eingangssignale $s_n$ am Eingang können das Format 625L/50Hz/2:1 haben mit 720*576 aktiven Bildpunkten für die Luminanzkomponente und mit jeweils 360*576 aktiven Bildpunkten für die Chrominanzkomponenten. Die Chrominanzkomponenten können entsprechend der Luminanzkomponente verarbeitet werden oder auch grundsätzlich im Halbbild gefiltert werden.

Die Ausgangssignale $s_n$ von Bildformatwandler und in codierter Form am Ausgang können z.B. ein progressives Bildformat mit 360*288 aktiven Bildpunkten für die Luminanzkomponente und mit jeweils 180*144 aktiven Bildpunkten für die Chrominanzkomponenten haben.

Jetzt wird der Bildformatwandler beschrieben. Der erste Eingang ist mit einem Vollbildspeicher verbunden und erhält um ein Halbbild verzögerte Bildsignale vom jeweils ersten Halbbild von Halbbildspeicheir, der zweite Eingang ist mit einer Bewegungs-Kompensationsschaltung verbunden und erhält zeilenverzögerte Bildsignale vom jeweils zweiten Halbbild von Zeilenspeicher, der dritte Eingang ist ebenfalls mit der Bewegungs-Kompensationsschaltung verbunden und erhält Bewegungsparameter vom Bewegungs-Parameter-Generator und der vierte Eingang erhält Ausgangssignale vom Änderunqsdetektor.

Die Bildsignale aus dem Zeilenspeicher werden entsprechend den bildweisen Bewegungsparametern aus dem Bewegungs-Parameter-Generator nach bekannten Verfahren bewegungskompensiert und dem Vollbildspeicher zugeführt. Über den Ausgang können die Zeilen im Zeilenspeicher adressiert werden. Am Ausgang des Vollbildspeichers liegen nun Vollbild-Signale mit maximaler vertikaler Ortsauflösung vor, die in dem anschließenden Vertikalfilter bildpunktweise entsprechend dem Signal am vierten Eingang im Vollbild oder im Halbbild gefiltert und ebenfalls über den Ausgang dem Änderungsdetektor zugeführt werden.

An das Vertikalfilter schließt sich eine Subsampling-Stufe an, an deren Ausgang das Bildsignal $s_n$ abgreifbar ist.

Die bildweisen Bewegungsparameter können jeweils für ein ganzes Bild gültige Zoom- und/oder Pan-Faktoren enthalten oder Verschiebungsvektoren für Ausschnitte innerhalb der Bilder sein. Zum Beispiel kann für jeden Bildpunktblock von 8*8 Bildpunkten ein Verschiebungsvektor gebildet werden.

**Patentansprüche**

1. Verfahren zur bewegungskompensierten Vertikalfilterung für aus Bildpunkten bestehende Bildsignale, **gekennzeichnet** durch:

- die Bildsignale werden vor einer bewegungskompensierten Codierung mindestens vertikal unterabgetastet ;
- die für diese Codierung verwendeten Bewegungsparameter werden als Bewegungsparameter - insbesondere als Zoom- und Pan-Parameter - für Bilder oder Bildbereiche bei der Unterabtastung verwendet;
- mit Hilfe einer Änderungsdetektion werden aufgrund der bild- oder bildbereichsmäßigen Bewegungskompensation nicht korrekt bewegungskompensierte Bildpunkte ermittelt;

- im Fall nicht korrekter Bewegungskompensation werden die Bildpunkte vertikal im Halbbild und im Fall korrekter Bewegungskompensation vertikal im Vollbild vor oder bei der Unterabtastung gefiltert, wobei vor der Filterung und Unterabtastung mit Hilfe der Bild- oder Bildbereichs-Bewegungsparameter mindestens ein zweites Halbbild $S^2_n$ auf die räumliche und zeitliche Position eines ersten Halbbilds $S^1_n$ verschoben wird, n = 1,2,3,...

2. Verfahren nach Anspruch 1, **dadurch gekennzeichnet**, daß die Bildsignale nach der Bildformatwandlung gegenüber den ursprünglichen Bildsignalen in vertikaler und/oder horizontaler Richtung um den Faktor zwei unterabgetastet sind, wobei die Bildsignale insbesondere vor der Bildformatwandlung im Zwischenzeilenformat und nach der Bildformatwandlung in einem progressiven Format vorliegen.

3. Verfahren nach der Anspruch 1 oder 2, **dadurch gekennzeichnet**, daß vor der Filterung und Unterabtastung jeweils ein zweites Halbbild $S^2_n$ und ein zweites Halbbild $S^2_{n-1}$ des vorhergehenden Bildes $S_{n-1}$ in die entsprechende räumliche und zeitliche Lage des entsprechenden ersten Halbbilds $S^1_n$ verschoben wird, wobei die beiden zweiten Halbbilder $S^2_n$ und $S^2_n$-1 gemittelt werden.

4. Verfahren nach einem oder mehreren der Ansprüche 1 bis 3, da**durch gekennzeichnet**, daß bei der Änderungsdetektion für jeden Bildpunkt im ersten Halbbild $S^1_n$ in einem symmetrisch hierzu angeordneten Fenster von Bildpunkt-Positionen die Absolutwerte der Differenzen der bewegungskompensierten zweiten Halbbilder $S^{2k}_{n-1}$, $S^{2k}_n$ zu einem Wert $\Sigma$ aufsummiert werden, wobei die Größe des Fensters insbesondere 5*4 Bildpunkte beträgt.

5. Verfahren nach Anspruch 4, **dadurch gekennzeichnet**, daß im bewegungskompensierten Vollbild gefiltert wird, wenn der Wert $\Sigma$ kleiner gleich einer ersten Schwelle $T_1$ ist und daß im Halbbild gefiltert wird, wenn der Wert $\Sigma$ größer als eine zweite, höhere Schwelle $T_2$ ist.

6. Verfahren nach Anspruch 5, **dadurch gekennzeichnet**, daß eine entsprechende Linearkombination beider Filtersignale verwendet wird, wenn der Wert $\Sigma$ zwischen den beiden Schwellen $T_1$ und $T_2$ liegt.

7. Verfahren nach Anspruch 5 oder 6, **dadurch gekennzeichnet**, daß die erste Schwelle einen Wert von ungefähr sechs mal und die zweite Schwelle einen Wert von ungefähr zwölf mal der Anzahl der Bildpunkte im Fenster hat.

## Claims

1. A process for movement-compensated vertical filtering for picture signals consisting of picture elements, characterised in that:

- prior to a movement-compensated coding the picture signals are at least vertically sub-sampled;

- the movement parameters used for this coding are used as movement parameters - in particular as zoom and pan parameters - for pictures or picture areas in the sub-sampling;

- with the aid of a change detection stage there are determined picture elements which have not been correctly movement-compensated on the basis of the picture-wise or picture-area-wise movement compensation;

- in the event of incorrect movement compensation the picture elements are filtered vertically in the field and in the event of correct movement compensation are filtered vertically in the frame prior to or during the sub-sampling, where prior to the filtering and sub-sampling with the aid of the picture-wise or picture-area-wise movement parameters at least one second field $S^2_n$ is displaced to the spatial and temporal position of a first field $S^1_n$, where n = 1,2,3,.... .

2. A process as claimed in Claim 1, characterised in that after the picture format conversion the picture signals are sub-sampled by a factor of two compared to the original picture signals in the vertical and/or horizontal direction, where the picture signals in particular occur in the interlaced format prior to the picture format conversion and in a progressive format following the picture format conversion.

3. A process as claimed in Claim 1 or 2, characterised in that prior to the filtering and sub-sampling a second field

$S^2_n$ and a second field $S^2_{n-1}$ of the preceding picture $S_{n-1}$ are in each case displaced into the corresponding spatial and temporal position of the corresponding first field $S^1_n$, where the two second fields $S^2_n$ and $S^2_{n-1}$ are averaged.

4. A process as claimed in one or more of Claims 1 to 3, characterised in that in the change detection, for each picture element in the first field $S^1_n$ in a window of picture element positions arranged symmetrically thereto the absolute values of the differences of the movement-compensated second fields $2^{2k}_{n-1}$, $S^{2k}_n$ are added to form a value $\Sigma$, where the size of the window amounts in particular to 5*4 picture elements.

5. A process as claimed in Claim 4, characterised in that filtering takes place in the movement-compensated frame when the value $\Sigma$ is smaller than or equal to a first threshold T1 and that filtering takes place in the field when the value $\Sigma$ is greater than a second, higher threshold $T_2$.

6. A process as claimed in Claim 5, characterised in that a corresponding linear combination of the two filter signals is used when the value $\Sigma$ lies between the two thresholds $T_1$ and $T_2$.

7. A process as claimed in Claim 5 or 6, characterised in that the first threshold has a value of approximately six times and the second threshold a value of approximately twelve times the number of the picture elements in the window.

**Revendications**

1. Procédé de filtrage vertical avec compensation du mouvement pour signaux vidéo composés de points, caractérisé en ce que :

   - les signaux vidéo sont soumis à un sous-échantillonage vertical avant d'être soumis à un codage avec compensation du mouvement ;
   - les paramètres de mouvement utilisés pour le codage se présentent sous la forme de paramètres de mouvement pour images ou parties d'image - notamment sous la forme de paramètres de zoom ou de panorama ;
   - des points incorrectement compensés en mouvement, sont détectés à l'aide d'un détecteur de mouvements grâce à la compensation du mouvement de l'image complète ou d'une partie de l'image ;
   - avant et pendant le sous-échantillonage, les points sont filtrés verticalement dans la trame lorsque la compensation du mouvement est incorrecte, tandis qu'ils sont filtrés verticalement dans l'image complète lorsque la compensation est correcte, sachant qu'avant le filtrage et le sous-échantillonage, une seconde trame $S^2_n$ est décalée sur la position spatio-temporelle d'une première trame $S^1_n$ à l'aide des paramètres de mouvement de l'image complète ou de la partie d'image, n-1,2,3 ...

2. Procédé selon la revendication 1, caractérisé en ce qu'après le changement de format, les signaux vidéo sont sous-échantillonés par rapport aux signaux vidéo initiaux dans le sens vertical et/ou horizontal par le facteur deux, sachant que les signaux vidéo se présentent sous un format entrelacé avant le changement de format et sous un format progressif après le changement de format.

3. Procédé selon la revendication 1 ou 2, Caractérisé en ce qu'avant le filtrage et le sous-échantillonage, une seconde trame $S^2_n$ et une seconde trame $S^2_{n-1}$ de l'image précédente $S_{n-1}$ sont respectivement décalées sur la position spatio-temporelle de la première trame correspondante $S^1_n$, sachant que les trames $S^2_n$ et $S^2_{n-1}$ peuvent faire l'objet d'un moyennage.

4. Procédé selon l'une ou plusieurs des revendications 1 à 3, caractérisé en ce que lors de la détection de mouvements, les valeurs absolues des différences entre les trames $S^{2k}_{n-1}$ et $S^{2k}_n$, compensées en mouvement, sont additionnées dans une fenêtre de points, disposée de manière symétrique, pour former une valeur $\Sigma$ pour chacun des points dans la première trame $S^1_n$, sachant que la taille de la fenêtre est de 5*4 points.

5. Procédé selon la revendication 4, caractérisé en ce que l'image complète compensée en mouvement est filtrée, lorsque la valeur $\Sigma$ est inférieure à un premier seuil $T_1$ et que la trame est filtrée lorsque la valeur $\Sigma$ est supérieure à un deuxième seuil $T_2$.

6. Procédé selon la revendication 5, caractérisé en ce qu'une combinaison linéaire correspondant aux deux signaux de filtre est utilisée si la valeur $\Sigma$ se situe entre les deux valeurs seuil $T_1$ et $T_2$.

**7.** Procédé selon la revendication 5 ou 6, caractérisé en ce que le premier seuil a une valeur d'environ 6 fois le nombre de points dans la fenêtre et que le deuxième seuil a une valeur d'environ 12 fois le nombre de points dans la fenêtre.